# EUROPÄISCHE PATENTANMELDUNG

(11) **EP 2 687 303 A1**
(43) Veröffentlichungstag der Anmeldung: **22.01.2014**
(21) Anmeldenummer: 12005307.9
(22) Anmeldetag: 20.07.2012
(51) Int. Cl.: B22D 11/128, B21B 27/00, B21B 27/08, B21B 39/00, C03B 35/18, F27D 3/02

(54) **Rollenanordnung für eine Stranggiessanlage**

(71) Anmelder: SMS Concast AG, 8027 Zürich (CH)
(72) Erfinder: Dratva, Christian, 8052 Zürich (CH)
(74) Vertreter: Luchs, Willi

(57) **Zusammenfassung**

Eine Rollenanordnung für eine Stranggießanlage ist mit einer Mehrzahl von als Stützrollen vorgesehene Führungsrollen (1) versehen. Diese sind längs eines von der Stranggießanlage erzeugten Strangs (2) in einem Achsabstand zueinander angeordnet und jeweils drehbar in einem Lagerbock (3) gelagert, welche jeweils vorgespannt an wenigstens einem Rahmenteil (4, 5) angeordnet sind. Die Rahmenteile (4, 5), an denen die Lagerböcke (3) elastisch befestigt sind, sind starr mit einer Kokille (6) oder einer Kokillenhalteeinrichtung der Stranggießanlage verbindbar. Die Lagerböcke (3) sind mittels elastisch nachgiebigen Verbindungsmitteln (6) selbsteinstellend an den Rahmenteilen (4, 5) gelagert. Auch bei sich während der Betriebsdauer oder infolge der geänderten Prozessparametern der Stranggiessanlage veränderndem Strangquerschnitt des erzeugten Strangs bleibt der ursprünglich eingestellte Anpresskraft der Führungsrollen im Wesentlichen unverändert.

## Beschreibung

Die Erfindung betrifft eine Rollenanordnung für eine Stranggiessanlage nach dem Oberbegriff des Anspruchs 1. Die Erfindung betrifft ferner eine Führungsrolle für eine solche Rollenanordnung nach dem Oberbegriff des Anspruchs 13.

Aus dem Stand der Technik sind Stranggiessanlagen zur diskontinuierlichen oder kontinuierlichen Herstellung von Knüppeln, Brammen oder ähnlichem bekannt.

Um den Metallstrang nach dem Verlassen der Kokille zu führen und zu kühlen werden in den bekannten Stranggiessanlagen drehbar gelagerte Führungsrollen verwendet. Diese Führungsrollen sind innen- oder aussenseitig wassergekühlt. Um die Stützfunktion zu gewährleisten, müssen die Achsabstände dieser Rollen gemäss dem Schrumpfungsverhalten des Giessstrangs präzise eingestellt werden, was sehr zeitaufwändig ist und zu Qualitäts- bzw. Produktionsverlusten führen kann, wenn diese Abstände ungenügend eingestellt sind.

Eine gattungsgemässe Rollenanordnung für eine Stranggiessanlage ist aus der JP 63072457-A bekannt. Diese Rollenanordnung umfasst eine Mehrzahl von Führungsrollen, welche längs des von der Stranggiessanlage erzeugten Strangs jeweils in einem axialen Abstand zueinander angeordnet sind. In der Rollenanordnung der JP-A-63072457 sind drei Reihen verschiedener Führungsrollen vorgesehen, wobei eine erste Reihe von Führungsrollen nachfolgend zum Ausgang der Kokille angeordnet ist und mehrere in Längsrichtung des erzeugten Strangs im Abstand zueinander angeordnete Rollen mit einem ersten Durchmesser umfasst. Danach schliesst sich in Strangrichtung eine zweite Reihe von Führungsrollen an, welche eine Mehrzahl von Führungsrollen umfasst, die einen kleineren Durchmesser als die Führungsrollen der ersten Reihe aufweisen. Diese zweite Reihe von Führungsrollen dient der Umlenkung des erzeugten Strangs in einer Kreiszone. An die zweite Reihe schliesst sich eine Dritte Reihe von Führungsrollen an, welche eine Mehrzahl von Führungsrollen aufweist, die gegenüber der zweiten Reihe einen grösseren Durchmesser aufweisen.

Mit zunehmender Betriebsdauer einer Stranggiessanlage wird der Strangquerschnitt aufgrund einer Abnutzung der Kokille grösser. Daraus entsteht das Problem, dass die bezüglich der Kokille fest angeordneten Führungsrollen nicht über die gesamte Einsatzdauer mit derselben Anpresskraft an der Oberfläche des erzeugten Strangs anliegen. Dies kann zu einer verminderten Qualität des erzeugten Strangprofils und/oder zu erhöhter Durchbruchhäufigkeit führen. Zudem müssen die Rollen aufgrund ihrer Abnützung durch den Strang wieder nachgestellt werden, was ebenfalls arbeits- bzw. zeitaufwändig ist.

Hiervon ausgehend liegt der Erfindung die Aufgabe zugrunde, eine Rollenanordnung für eine Stranggiessanlage zu schaffen, bei der die Führungsrollen zu jeder Zeit mit einem optimalen Anpressdruck an der Oberfläche des erzeugen Strangs anliegen. Dabei soll der aus der Kokille austretende Strang gestützt und geführt, aber nicht durch unnötige Kräfte belastet werden, dies zum Beispiel durch nicht korrekt eingestellte Rollenpositionen.

Diese Aufgabe wird mit einer Rollenanordnung gemäss den Merkmalen des Anspruchs 1 gelöst.

Eine weitere Aufgabe der Erfindung besteht darin, eine Führungsrolle für eine Rollenanordnung einer Stranggiessanlage zu schaffen, welche eine möglichst effiziente Kühlung der Führungsrolle über ihre gesamte Führungsfläche ermöglicht.

Diese Aufgabe wird mit einer Führungsrolle gemäss den Merkmalen des Anspruchs 13 gelöst.

Die erfindungsgemässe Rollenanordnung für eine Stranggiessanlage umfasst eine Mehrzahl von Führungsrollen, welche längs des von der Stranggiessanlage erzeugten Strangs in einem Abstand zueinander angeordnet und jeweils drehbar in mindestens einem Lagerbock gelagert sind. Die Lagerböcke sind dabei jeweils federelastisch an einem Rahmen bzw. einem Rahmenteil gelagert. Das Rahmenteil ist zweckmässig Bestandteil der Anlage oder eines fest mit der Kokille verbundenen Rahmens.

Durch die federelastische Lagerung der Lagerböcke werden die in den Lagerböcken drehbar gelagerten Führungsrollen selbsteinstellend an die Oberfläche des erzeugten Strangs gedrückt. Auch bei sich während der Betriebsdauer oder infolge der geänderten Prozessparametern der Stranggiessanlage veränderndem Strangquerschnitt des erzeugten Strangs bleibt der ursprünglich eingestellte Anpresskraft der Führungsrollen im Wesentlichen unverändert, weil sich die Lage der Führungsrollen aufgrund der federelastischen Lagerung der Lagerböcke an den Strangquerschnitt anpassen kann.

Durch fehlenden Kontakt der Rollen an der Strangoberfläche oder aufgrund blockierender Rollen wegen Überhitzung der Lagerung können Oberflächenfehler am Strang in Form von Längskratzern oder ähnlichem entstehen.

Auch der Zusammenbau dieser erfindungsgemässen Rollenanordnung lässt sich sehr einfach bewerkstelligen, da die Rollen nicht in Bezug auf den Strangquerschnitt sehr genau voreingestellt werden müssen. Zweckmässig sind die Lagerböcke durch federelastische Verbindungsmittel an dem Rahmen bzw. den Rahmenteilen federelastisch gelagert. Bei den federelastischen Verbindungsmitteln kann es sich beispielsweise um Bügel, Bänder, Teller- oder Blattfedern aus Federstahl handeln. Die federelastischen Verbindungsmittel können auch durch Druckfedern, insbesondere Gasdruckfedern, oder durch Torsionsfedern gebildet werden.

Bevorzugt weisen die federelastischen Verbindungsmittel eine lineare Federkennlinie auf, um eine möglichst gute Anpassung der Lage der Führungsrollen in Bezug auf den erzeugten Strang und dadurch einen gleichbleibenden Anpressdruck zu gewährleisten. Durch eine geeignete Auswahl bzw. Anpassung der federelastischen Verbindungsmittel kann der Anpressdruck, mit dem die Führungsrollen an die Oberfläche des Strangs gedrückt werden, zunächst auf einen optimalen Wert eingestellt werden. Der zunächst eingestellte Anpressdruck bleibt dann auch im weiteren Verlauf der Betriebsdauer der Stranggiessanlage aufgrund der federelastischen Lagerung der Lagerböcke im Wesentlichen unverändert, da sich die Lage der Führungsrollen an den Querschnitt des erzeugten Strangs anpasst, wenn sich dieser, bspw. durch Verschleiß der Kokille oder infolge der geänderten Prozessparameter, mit zunehmender Betriebsdauer der Stranggiessanlage ändern sollte.

Um eine möglichst einfache und optimale Anpassung des Anpressdrucks bzw. der Anpresskraft zu ermöglichen, sind die federelastischen Verbindungsmittel, über welche die Lagerböcke an den Rahmenteilen gelagert sind, durch Gasdruckfedern gebildet, deren Federdruck auf einfache Art eingestellt und angepasst werden kann. Als besonders zweckmässig hat sich die Einstellung einer Anpresskraft je nach Position der jeweiligen Führungsrolle und Giessformat zwischen 100 N und 1200 N erwiesen.

Die Führungsrollen können je nach Anforderung beispielsweise an zwei gegenüberliegenden Seiten des erzeugten Strangs oder auch so angeordnet sein, dass sie den Strang an allen Seiten umgeben. Auch eine Anordnung der Führungsrollen nur an der Strangunterseite ist möglich. Entsprechende Anordnungen der Führungsrollen in Form von Rollenkränzen, Doppelrollen oder einfache Rollen sind aus dem Stand der Technik bekannt.

Um den erzeugten Strang möglichst in geringen Abständen der Rollen zu stützen und einwandfrei zu führen, werden in der Rollenanordnung zweckmässig Führungsrollen mit einem kleineren Durchmesser verwendet, verglichen mit den aus dem Stand der Technik bekannten Führungsrollen. Diese Führungsrollen mit kleinem Durchmesser werden in einem möglichst kleinen Achsabstand (pitch) zueinander in Längsrichtung des erzeugten Strangs hintereinander liegend angeordnet. Solche geringe Rollenabstände vermindern die Ausbauchung der Strangschale infolge des ferrostatischen Innendruckes im Strang, was zu erhöhter Betriebssicherheit und Qualitätsverbesserung im Stranginnern führt.

Um eine möglichst effiziente Kühlung der Führungsrollen zu ermöglichen, weisen die erfindungsgemässen Führungsrollen einen zylindrischen Rollenkern auf, um den ein Rollenmantel angeordnet ist. Der Rollenkern weist an seinem Aussenumfang einen im Wesentlichen helixförmigen Kühlmittelkanal auf. Dieser helixförmige Kühlmittelkanal ist mit einer Kühlmittelversorgungsleitung zur Durchleitung eines Kühlmittels verbindbar. Die helixförmige Ausbildung des Kühlmittelkanals stellt eine gleichmässige Kühlung der Führungsrolle über die gesamte Rollenbreite sicher. Mit dieser verhältnismässig intensiven Kühlung in den dünnen Rollen ist sichergestellt, dass diese Rollen formstabil bleiben und sich nicht durch thermische Spannungen verbiegen.

Der Rollenmantel ist zweckmässig als Schrumpfteil aus Metall, beispielsweise Grauguss, gebildet und ist auf den Rollenkern aufgeschrumpft.

In einem bevorzugten Ausführungsbeispiel umfasst die erfindungsgemässe Führungsrolle beidseitig einen Lagerzapfen, der über ein Gleitlager oder ein Wälzlager drehbar in einem Lagerbock gelagert ist. Zweckmässig sind die beiden Lagerzapfen jeweils als Hohlzapfen ausgebildet und mit der Kühlmittelversorgungsleitung verbindbar, um das Kühlmittel durch eine Bohrung des Hohlzapfens in den helixförmigen Kühlmittelkanal des Rollenkerns zu leiten bzw. aus diesem abzuführen. Dabei stehen die als Hohlzapfen ausgebildeten Lagerzapfen jeweils über einen radialen Verbindungskanal in dem Rollenkern mit dem helixförmigen Kühlmittelkanal in Verbindung. Als besonders zweckmässig erweist sich bei diesem Ausführungsbeispiel die Verwendung eines Gleitlagers zur Lagerung der Führungsrolle in dem Lagerbock. Das durch den als Hohlzapfen ausgebildeten Lagerzapfen geleitete Kühlmittel kann in dieser Ausführungsform gleichzeitig als Schmier- und Kühlmittel für das Gleitlager dienen.

Ausführungsbeispiele sowie weitere Vorteile der Erfindung sind nachfolgendend anhand der begleitenden Zeichnungen erläutert. Die Zeichnungen zeigen:
- Fig. 1:: Perspektivische Darstellung einer erfindungsgemässen Rollenanordnung für eine Stranggiessanlage;
- Fig. 2:: Längsschnitt durch die Rollenanordnung von Fig. 1;
- Fig.3:: Querschnitt durch die Rollenanordnung von Fig. 2, entlang der Linie B-B;
- Fig. 4:: perspektivische Darstellung mehrerer Führungsrollen der Rollenanordnung von Fig. 1;
- Fig. 5:: perspektivische Darstellung der federelastischen Verbindungsmittel, die zur Befestigung der Führungsrollen nach Fig. 4 an einem Rahmen dienen;
- Fig.6:: Darstellung einer erfindungsgemässen Führungsrolle in einer perspektivischen Ansicht (Fig. 6A,) einer teilweise im Aufriss dargestellten Ansicht (Fig. 6b) und einer Querschnittsdarstellung (Fig. 6c);
- Fig. 7:: Schnitt einer weiteren Ausführungsform einer erfindungsgemässen Führungsrolle;
- Fig. 8:: Schnitt einer weiteren Ausführungsform einer erfindungsgemässen Führungsrolle; und
- Fig. 9:: Schnitt einer weiteren Ausführungsform einer erfindungsgemässen Führungsrolle.

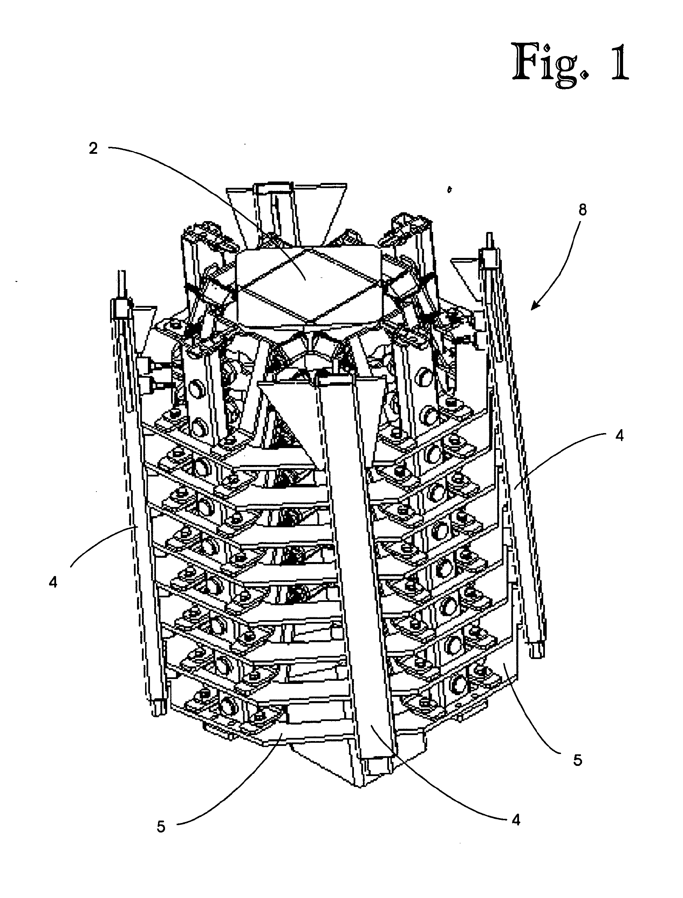

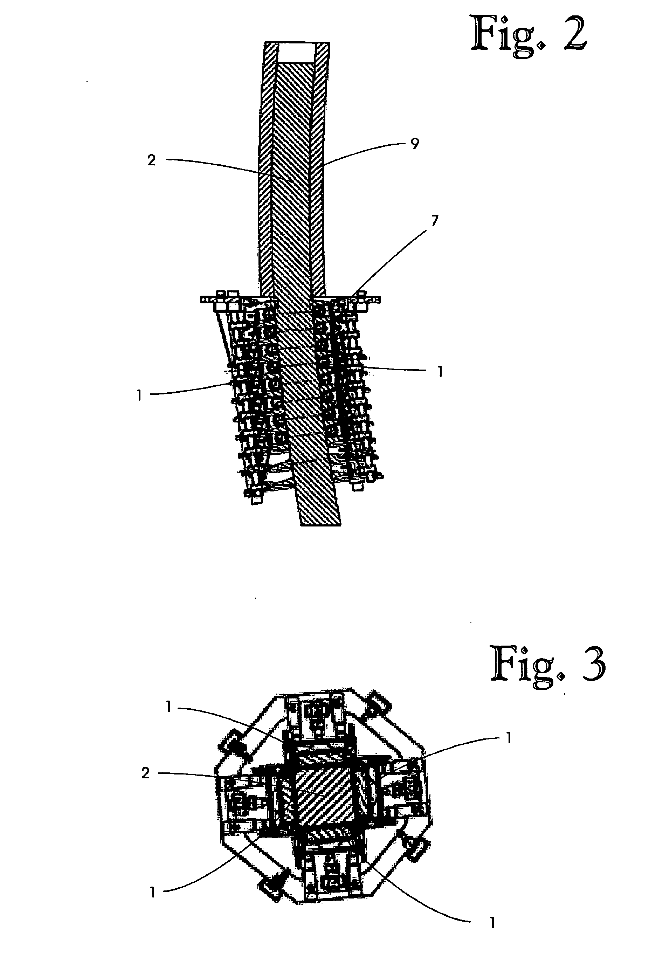

Die in Fig. 1 und Fig. 2 gezeigte Rollenanordnung für eine Stranggiessanlage umfasst einen Rahmen 8, welcher vorzugsweise fest mit einer Kokille 9 der Stranggiessanlage verbunden ist. Dabei oszilliert der Rahmen 8 mit der Oszillation der Kokille 9 mit oder er ist wie ein Führungssegment fest entlang der Giesslänge befestigt. In der Kokille 9 ist der erzeugte Strang 2 insbesondere aus Stahl geführt. Der aus der Kokille 9 austretende Strang muss daher mittels einer Rollenanordnung gestützt und geführt werden. Um gleichzeitig eine Kühlung des Strangs 2 zu ermöglichen, umfasst die Rollenanordnung gekühlte Führungsrollen 1.

Wie sich insbesondere aus der Querschnittsdarstellung der Fig. 3 ergibt, sind die Führungsrollen 1 bei dem hier gezeigten Ausführungsbeispiel an allen vier Seiten des im Querschnitt rechteckigen Strangs 2 angeordnet. Andere Anordnungen, wie Sie aus dem Stand der Technik bekannt sind, sind jedoch mit der erfindungsgemässen Rollenanordnung möglich.

Wie sich aus Fig. 2 ergibt, sind in Längsrichtung des Strangs 2 an jeder Seite mehrere Führungsrollen 1 hintereinander und in einem axialen Abstand zueinander angeordnet. Der Achsabstand von benachbarten Führungsrollen 1 beträgt dabei zweckmässig mindestens 50 mm und höchstens 200 mm, dies vorzugsweise in den ersten 2 bis 3 Metern nach der Kokille. Bevorzugt werden axiale Abstände von weniger als 100 mm gewählt. Als besonders geeignet haben sich axiale Abstände von axial benachbarten Führungsrollen von beispielsweise 70 mm erwiesen, bei einem Durchmesser der Führungsrollen von 45 mm.

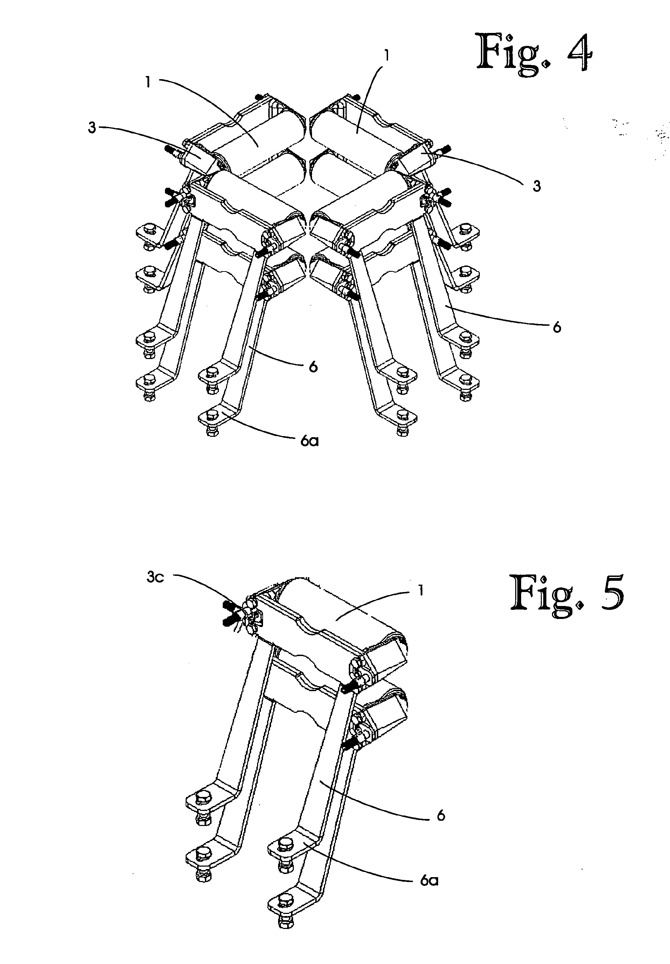

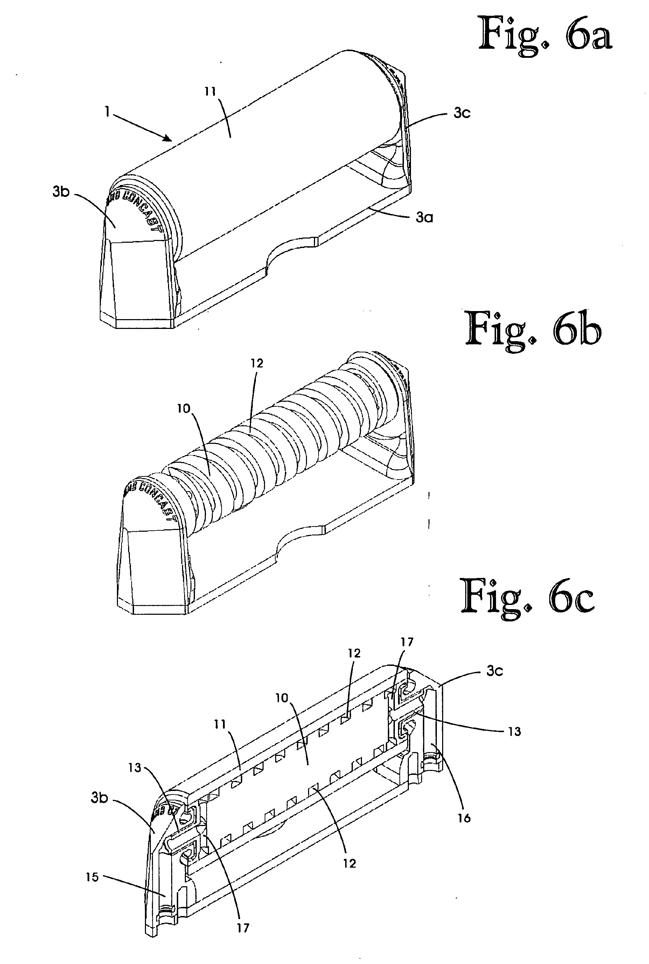

Die Führungsrollen 1 sind jeweils drehbar in einem Lagerbock 3 gelagert (Fig. 4). Jeder Lagerbock 3 umfasst dabei eine als Platte ausgebildete Lagerbockaufstandsfläche 3a und zwei senkrecht darauf angeordnete Böcke 3b, 3c (Fig. 6). Die Lagerbockaufstandsfläche 3a ist über federelastische Verbindungsmittel 6 an dem Rahmen 8 federelastisch gelagert.

Bei dem in Fig. 5 gezeigten Ausführungsbeispiel sind die federelastischen Verbindungsmittel 6 durch Bügel bzw. Bänder aus Federstahl gebildet, wobei für jede Lagerbockaufstandsfläche 3c zwei solcher Bügel bzw. Bänder aus Federstahl vorgesehen sind. Über diese federelastischen Verbindungsmittel 6 ist jeder Lagerbock 3 federelastisch an dem Rahmen 8 gelagert.

Bei dem in Fig. 1 bis Fig. 3 gezeigten Ausführungsbeispiel umfasst der Rahmen 8 vertikale Rahmenteile 4 und daran befestigte horizontale Rahmenteile 5. Die vertikalen Rahmenteile 4 erstrecken sich um den Strang 2 in Längsrichtung des Strangs und sind vorzugsweise an einem an der Kokille 9 befestigten Flansch 7 befestigt. Zwischen den vertikalen Rahmenteilen 4 erstrecken sich im Abstand zueinander und parallel übereinander angeordnete horizontale Rahmenteile 5, an denen die Fussteile 6a der federelastischen Verbindungsmittel 6 befestigt sind, insbesondere angeschraubt.

Durch die gezeigte Anordnung werden die Führungsrollen 1 aufgrund der federelastischen Lagerung der Lagerböcke 3 an die Oberfläche des Strangs 2 mit einer vorgegebenen und einstellbaren Anpresskraft (Anpressdruck) gedrückt. Die Anpresskraft bzw. der Anpressdruck kann dabei durch geeignete Auswahl bzw. Anpassung der federelastischen Verbindungsmittel 6 auf einen gewünschten Wert eingestellt werden. Handelt es sich bei den federelastischen Verbindungsmitteln 6 beispielsweise um Bügel bzw. Bänder aus Federstahl, kann der Anpressdruck durch die Dicke der Bügel bzw. Bänder variiert werden. Zweckmässig sind die federelastischen Verbindungsmittel 6 durch Druckfedern, beispielsweise durch Gasdruckfedern, gebildet. Mit solchen Druckfedern kann ein gewünschter Federdruck und damit eine gewünschte Anpresskraft der Führungsrollen 1 an der Oberfläche des Strangs 2 eingestellt werden. Zweckmässig wird eine Anpresskraft je nach Position und Giessformat zwischen 100 N und 1200 N gewählt.

Beim Giessstart der Stranggiessanlage wird zunächst ein Anfahrstrang (Kaltstrang) in die Kokille 9 eingeführt, der den Kokillenausgang zunächst verschliesst. Das danach in die Kokille 9 eingefüllte schmelzflüssige Metall erstarrt dann auf dem Anfahrkopf und wird mit diesem aus der Kokille 9 herausgezogen. Dabei werden die unter der Federkraft der federelastischen Verbindungsmittel 6 vorgespannten Führungsrollen 1 (radial) nach aussen, d.h. vom Anfahrkopf weg, gedrückt und liegen dann unter der Vorspannung der Verbindungsmittel 6 mit einer vorgegebenen Anpresskraft an der Oberfläche des Strangs 2 an.

In Fig. 6 ist ein erstes Ausführungsbeispiel einer erfindungsgemässen Führungsrolle gezeigt. Diese Führungsrolle ist drehbar in einem Lagerbock 3 gelagert, wobei der Lagerbock 3 eine plattenförmige Lagerbockaufstandsfläche 3a und zwei senkrecht darauf angeordnete Böcke 3b, 3c aufweist. Die Führungsrolle 1 ist beidseitig in den Böcken 3b, 3c des Lagerbocks 3 drehbar gelagert und sie umfasst einen zylindrischen Rollenkern 10 sowie einen um den Rollenkern 10 angeordneten Rollenmantel 11, der zylindermantelförmig ausgebildet ist (Fig. 6b und Fig. 6c). Am Aussenumfang weist der zylindrische Rollenkern 10 einen im Wesentlichen helixförmigen Kühlmittelkanal 12 auf, welcher durch eine helixförmige Nut im Aussenumfang des Rollenkerns 10 gebildet und aussenseitig durch die Innenumfangsfläche des Rollenmantels 11 begrenzt ist. Bei dem Rollenmantel 11 handelt es sich bevorzugt um ein Schrumpfteil aus Metall, welches durch Hitze auf den Rollenkern 11 aufgeschrumpft wird.

Gemäss Fig. 6c umfasst die Führungsrolle 1 jeweils an ihren beiden Stirnseiten einen Lagerzapfen 13, der als Hohlzapfen mit einer Durchgangsbohrung ausgebildet ist. Die beiden Lagerzapfen 13 der Führungsrolle 1 sind über ein Gleitlager 14 in den Böcken 3b, 3c des Lagerbocks 3 gelagert. In den Böcken 3c, 3b des Lagerbocks 3 sind ein Zufuhrkanal 15 bzw. ein Abfuhrkanal 16 für ein Kühlmittel vorgesehen. Die Kanäle 15 und 16 werden mit einem Kühlmittelkreislauf verbunden und stehen zur Durchleitung eines Kühlmittels durch die Führungsrolle 1 mit der Durchgangsbohrung der als Hohlzapfen ausgebildeten Lagerzapfen 13 in Verbindung.

Im Inneren des Rollenkerns 10 sind radiale Verbindungskanäle 17 vorgesehen, über welche der helixförmige Kühlmittelkanal 12 mit der Bohrung in den Lagerzapfen 13 in Verbindung steht. Durch diese Anordnung wird eine Kühlmittelleitung gebildet, über die ein Kühlmittel durch die Führungsrolle 1 geführt werden kann. Aufgrund der helixförmigen Ausbildung des helixförmigen Kühlmittelkanals 12 im Rollenkern 10 wird gewährleistet, dass über die gesamte Breite der Führungsrolle 1 eine gleichmässige Kühlung insbesondere des Rollenmantels 11 erfolgt.

Das durch den Kanal 15 im Bock 3b einströmende Kühlmittel, bei dem es sich vorzugsweise um Wasser handelt, kommt bei der in Fig. 6 gezeigten Ausführungsform, bei der das Lager als Gleitlager 14 ausgebildet ist, mit dem Gleitlager in Berührung und trägt dadurch zur Schmierung des Gleitlagers 14 bei. Die Schmierwirkung wird dabei mit zunehmender Betriebsdauer der Stranggiessanlage erhöht, weil das Lagerspiel größer wird und dadurch mehr Kühlmittelflüssigkeit in das Lager 14 eindringen kann. Bei der Schmierung der Gleitlager mit Wasser als Kühlmittel ergibt sich im Gegensatz zur konventionellen Lagerschmierung keine Kontamination des Wasserkühlkreislaufes mit ölbasierten Schmiermitteln. Zusätzlich ermöglicht die federelastische Anstellung die Kompensation des Verschleisse des Gleitlagerbüchsen.

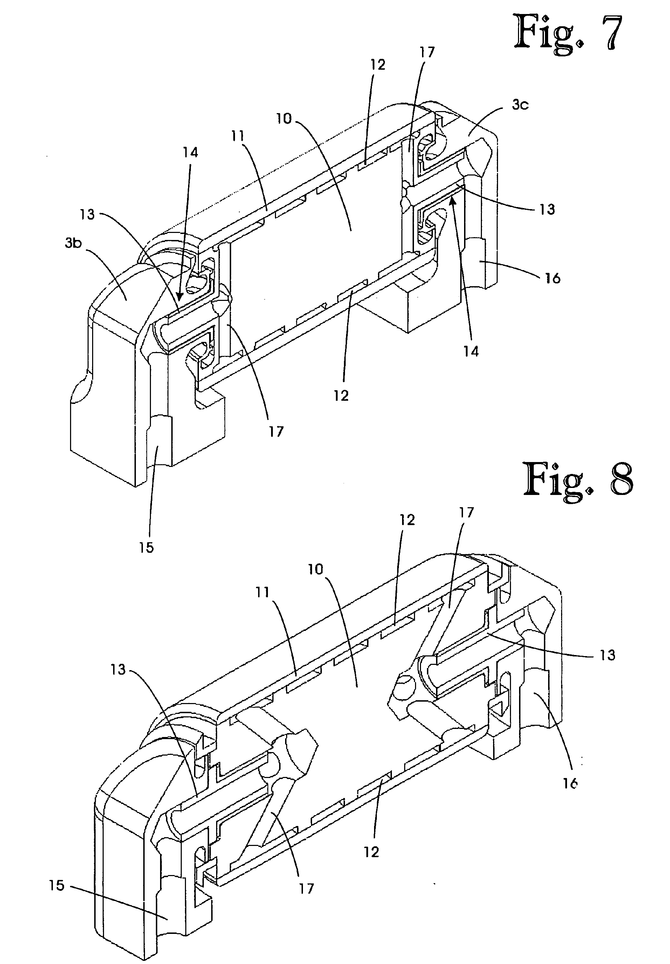

In den Fig. 7 und Fig. 8 sind zwei weitere Ausführungsbeispiele einer erfindungsgemässen Führungsrolle im Schnitt dargestellt. Die in Fig. 7 gezeigte Ausführungsform zeichnet sich dabei durch ihre robuste und kostengünstige Bauweise aus. Bei der in Fig. 8 gezeigten Ausführungsform ist eine sehr effiziente Kühlung der Randbereiche der Führungsrolle 1 vorgesehen. Dies wird dabei durch schräg verlaufende Zufuhrkanäle 17' im Rollenkern 11 gewährleistet, über welche der helixförmige Kühlmittelkanal 12 mit dem Zufuhrkanal 15 bzw. dem Abfuhrkanal 16 in Verbindung steht.

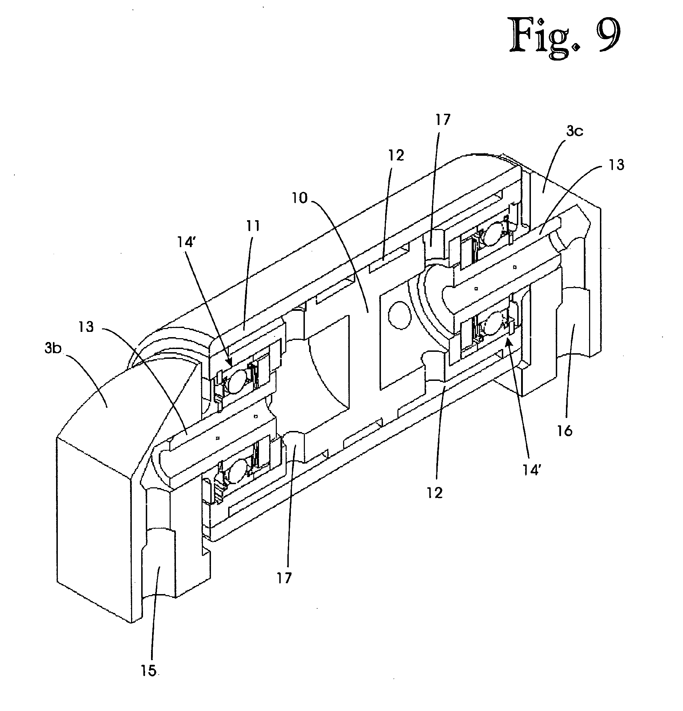

In Fig. 9 ist eine Variante einer erfindungsgemässen Führungsrolle gezeigt, wobei bei diesen anstatt des Gleitlagers 14 ein Wälzlager 14'zur Lagerung der Führungsrolle 11 in dem Lagerbock 3 verwendet wird.

Im Rahmen der Erfindung könnten die Lagerböcke auch modulartig an mehreren getrennt voneinander angeordneten Rahmenteilen befestigt sein.

## Patentansprüche

1. Rollenanordnung für eine Stranggießanlage mit einer Mehrzahl von als Stützrollen vorgesehene Führungsrollen (1), welche längs eines von der Stranggießanlage erzeugten Strangs (2) in einem Achsabstand zueinander angeordnet und jeweils drehbar in einem Lagerbock (3) gelagert sind, **dadurch gekennzeichnet, dass**
die Lagerböcke (3) jeweils vorgespannt an wenigstens einem Rahmenteil (4, 5) angeordnet sind.

2. Rollenanordnung nach Anspruch 1, **dadurch gekennzeichnet, dass** die Rahmenteile (4, 5), an denen die Lagerböcke (3) elastisch befestigt sind, starr mit einer Kokille (6) oder einer Kokillenhalteeinrichtung der Stranggießanlage verbindbar sind.

3. Rollenanordnung nach Anspruch 1 oder 2, **dadurch gekennzeichnet, dass** die Lagerböcke (3) mittels elastisch nachgiebigen Verbindungsmitteln (6) selbsteinstellend an den Rahmenteilen (4, 5) gelagert sind.

4. Rollenanordnung nach Anspruch 3, **dadurch gekennzeichnet, dass** es sich bei den elastisch nachgiebigen Verbindungsmitteln (6) um Bügel, Bänder, Blatt-, Torsions-, Teller- oder Formfedern handelt.

5. Rollenanordnung nach Anspruch 3, **dadurch gekennzeichnet, dass** es sich bei den elastisch nachgiebigen Verbindungsmitteln (6) um Druckfedern, insbesondere Gasdruckfedern handelt.

6. Rollenanordnung nach Anspruch 3, **dadurch gekennzeichnet, dass** die elastisch nachgiebigen Verbindungsmittel (6) vorzugsweise eine lineare Federkennlinie aufweisen.

7. Rollenanordnung nach einem der vorhergehenden Ansprüche, **dadurch gekennzeichnet, dass** die Führungsrollen (1) durch die elastisch nachgiebige Lagerung der Lagerböcke (3) an die Oberfläche des Strangs (2) gedrückt werden.

8. Rollenanordnung nach Anspruch 7, **dadurch gekennzeichnet, dass** die Anpresskraft, mit der die Führungsrollen (1) an die Oberfläche des Strangs (2) gedrückt werden, durch Auswahl, Anpassung oder Einstellung der elastisch nachgiebigen Verbindungsmittel (6) einstellbar ist.

9. Rollenanordnung nach Anspruch 7 oder 8, **dadurch gekennzeichnet, dass** die Anpresskraft, mit der die Führungsrollen (1) an die Oberfläche des Strangs (2) gedrückt werden, in Abhängigkeit der Strangbreite, je nach Position der Rollen, des Giessformates und/oder der Giessprozessparametern zwischen 100 N und 2200 N liegt.

10. Rollenanordnung nach einem der vorhergehenden Ansprüche 1 bis 9, **dadurch gekennzeichnet, dass** der Durchmesser der Führungsrollen (3) zwischen mindestens 40 und 70 mm liegt und bevorzugt 45 mm beträgt.

11. Rollenanordnung nach einem der vorhergehenden Ansprüche 1 bis 10, **dadurch gekennzeichnet, dass** der Achsabstand von axial benachbarten Führungsrollen kleiner als 100 mm beträgt.

12. Rollenanordnung nach einem der vorhergehenden Ansprüche 1 bis 11, **dadurch gekennzeichnet, dass** der axiale Abstand von axial benachbarten Führungsrollen kleiner als 200 mm und bevorzugt kleiner als 100 mm ist.

13. Führungsrolle für eine Stranggießanlagen-Rollenanordnung, insbesondere für eine Rollenanordnung nach einem der vorhergehenden Ansprüche 1 bis 12, wobei die Führungsrolle (1) drehbar in einem Lagerbock (3) lagerbar und mit einer Kühlmittelversorgungsleitung verbindbar ist und einen Rollenkern (10) sowie einen um den Rollenkern (10) angeordneten Rollenmantel (11) umfasst, **dadurch gekennzeichnet, dass** der Rollenkern (10) einen im Wesentlichen helixförmigen Kühlmittelkanal (12) aufweist, welcher mit der Kühlmittelversorgungsleitung zur Durchleitung eines Kühlmittels durch die Führungsrolle verbindbar ist.

14. Führungsrolle nach Anspruch 13, **dadurch gekennzeichnet, dass** der Rollenmantel (11) als Schrumpfteil ausgebildet ist und auf den Rollenkern (10) aufgeschrumpft ist.

15. Führungsrolle nach Anspruch 13 oder 14, **dadurch gekennzeichnet, dass** die Führungsrolle beidseitig einen Lagerzapfen (13) mit einem Gleitlager (14) oder ein einem Wälzlager (14') umfasst.

16. Führungsrolle nach Anspruch 15, **dadurch gekennzeichnet, dass** die Lagerzapfen (13) jeweils als Hohlzapfen ausgebildet und mit der Kühlmittelversorgungsleitung verbindbar sind, um ein Kühlmittel durch den Hohlzapfen in den Kühlmittelkanal (12) zu leiten oder aus diesem abzuführen.

17. Führungsrolle nach Anspruch 16, **dadurch gekennzeichnet, dass** die als Hohlzapfen ausgebildeten Lagerzapfen (13) jeweils über einen radialen Verbindungskanal (17) mit dem helixförmigen Kühlmittelkanal (12) in Verbindung stehen.

18. Führungsrolle nach Anspruch 15, **dadurch gekennzeichnet, dass** das Gleitlager (14) durch das durch den als Hohlzapfen ausgebildeten Lagerzapfen (13) geleitete Kühlmittel geschmiert wird, wobei das Kühlwasser dicht durch den Hohlzapfen geführt wird.
